# EUROPÄISCHE PATENTSCHRIFT

(11) **EP 0 830 810 B1**
(45) Veröffentlichungstag und Bekanntmachung des Hinweises auf die Patenterteilung: **14.10.1998**
(21) Anmeldenummer: 96919581.7
(22) Anmeldetag: 24.05.1996
(51) Int. Cl.: H05K 7/14

(54) **KOMMUNIKATIONSFÄHIGE SCHALTGERÄTEEINHEIT**
SWITCHGEAR UNIT CAPABLE OF COMMUNICATION
UNITE D'APPAREILLAGES DE COMMUTATION CONVERNANT AUX TELECOMMUNICATIONS

(30) Priorität: 08.06.1995 DE 19521001
(43) Veröffentlichungstag der Anmeldung: 25.03.1998
(73) Patentinhaber: SIEMENS AKTIENGESELLSCHAFT, 80333 München (DE)
(72) Erfinder: KAADEN, Peter, D-92421 Schwandorf (DE)
(86) Internationale Anmeldenummer: DE9600912
(87) Internationale Veröffentlichungsnummer: WO9642188

(56) Entgegenhaltungen:
- EP-A- 0 236 711
- DE-A- 2 810 071
- DE-A- 3 628 835

## Beschreibung

Die Erfindung bezieht sich auf Schaltgeräte in einem Schaltschrank, die über einen Datenbus untereinander oder zu einer übergeordneten speicherprogrammierbaren Steuerung (SPS) hin kommunikationsfähig sind.

Derartige Systeme mit Schaltgeräten einschließlich der dazugehörigen Steuer- und ggf. Meßgeräte sowie Bedien- und Anzeigegeräte, die über busfähige Koppelglieder an einem Datenbus, z.B. einem Zweidraht-Bus angekoppelt sind, sind in der WO-94/24647 offenbart. Hierbei entfällt die übliche Steuerverdrahtung. An den Datenbus ist eine Anschaltungsbaugruppe angeschlossen, die über einen seriellen Übertragungsbus mit einem Kommunikationsprozessor einer speicherprogrammierbaren Steuerung in Verbindung steht. Die Anschaltungsbaugruppe weist einen Mikroprozessor mit einem Steuerprogramm auf, das bei entsprechender Auslegung den Betrieb des Schaltschranks als unabhängige Funktionsinsel, d.h. als geschlossenes System gestattet. Darüber hinaus ist ein übergeordnetes Eingreifen in die Steuerung der Schalt-, Steuer- und Meßgeräte durch den möglicherweise entfernt gelegenen Kommunikationsprozessor möglich. Durch diesen Systemaufbau werden übergeordnete Systeme, wie die speicherprogrammierbare Steuerung, über den Kommunikationsprozessor von Steuerfunktionen entlastet, die Schutzfunktion vor Ort entkoppelt und damit beschleunigt, und bei einem Ausfall des Übertragungsbusses ist ein definiertes Verhalten des "Systems Schaltschrank" möglich.

Von der Anwenderseite her besteht die Forderung nach einer einfachen Handhabung, die eine schnelle und zuverlässige Inbetriebnahme von oben beschriebenen Schaltgeräten einschließlich Kommunikation ermöglicht.

Daher liegt der Erfindung die Aufgabe zugrunde, für einen Schaltschrank mit Datenbus eine einfache Adaptierung und Kontaktierung von Schaltgeräten in Verbindung mit einer zur Kommunikation erforderlichen Elektronik zu schaffen.

Erfindungsgemäß wird diese Aufgabe gelöst durch eine Datenkommunikationsfähige Schaltgeräteeinheit gemäß Patentanspruch 1. Dieser weist einen Geräteträger auf, auf dem mehrere elektromagnetisch betriebene Schaltgeräte, z.B. Schütze, Überlastrelais und Leistungsschalter über eine Hutschiene adaptierbar sind. Weiterhin enthält diese Schaltgeräteeinheit ein über einen Datenbus Kommunikationsfähiges Kommunikationsmodul, das am Geräteträger gehalten ist und Steckkontakte aufweist, über die die elektrische Ansteuerung der Schaltgeräte möglich ist.

Eine vorteilhafte Ausführungsform besteht, wenn der Geräteträger mit elektrischen ersten Kontakten und Schnappverbindungsmitteln derart versehen ist, daß bei Aufschnappen auf die Normprofilschiene in dieser integrierte Daten- und Versorgungsleitungen mit den ersten Kontakten automatisch kontaktiert werden.

Eine einfache elektrische Anbindung der Schaltgeräteeinheit wird erreicht, wenn der Geräteträger rückseitig mit Stromanschlüssen zur elektrischen Verbindung mit Sammelschienen als Hauptstrombahnen versehen ist, an die elektrische Verbraucher über die Schaltgeräte zuschaltbar sind.

Zur Stromversorgung und zum Datenverkehr ist es vorteilhaft, wenn am Kommunikationsmodul ein Steckplatz zum Anschluß eines Bussteckers vorgesehen ist.

Weitere vorteilhafte Ausgestaltungen der Erfindung sind den Unteransprüchen 5 bis 11 zu entnehmen.

Einige Ausführungsbeispiele der Erfindung werden im folgenden anhand einer Zeichnung näher erläutert. Es zeigen:
- FIG 1: eine Explosionsdarstellung der erfindungsgemäßen Schaltgeräteeinheit,
- FIG 2: die Schaltgeräteeinheit nach FIG 1 in teilweise zusammengesetztem Zustand,
- FIG 3: eine Schaltgeräteeinheit mit zwei Schützen in einer die Montage wiedergebenden Darstellung,
- FIG 4: eine auf eine Normprofilschiene mit eingelegter Steuerschiene aufgeschnappte Schaltgeräteeinheit,
- FIG 5: die Rückseite der Schaltgeräteinheit gemäß FIG 4,
- FIG 6: die Seitenansicht einer Schaltgeräteeinheit mit Hauptstromanschlüssen.

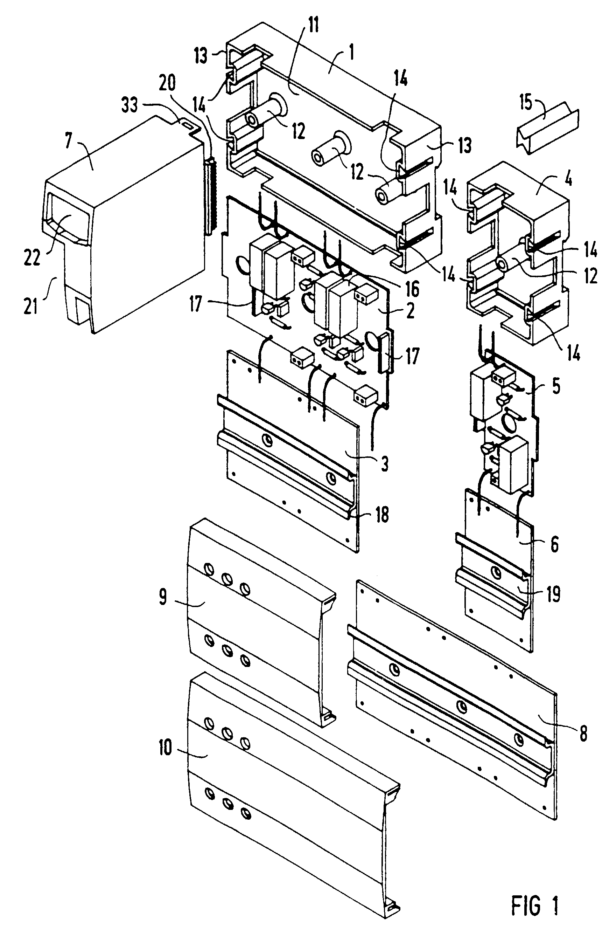

Die in FIG 1 dargestellte kommunikationsfähige Schaltgeräteeinheit beinhaltet einen Geräteträger 1, eine Leiterplatte 2, eine Abdeckplatte 3, ein Kommunikationsmodul 7, hier nicht dargestellte Schaltgeräte und eine Frontabdeckung 9.

Mit Hilfe eines Geräteträger-Erweiterungsteil 4, eines Leiterplatten-Erweiterungsteils 5, einer Abdeckzusatzplatte 6 bzw. einer verlängert ausgeführten Abdeckplatte 8 und einer angepaßten Frontabdeckung 10 ist die Schaltgeräteeinheit erweiterbar.

Der Geräteträger 1 ist wannenförmig ausgebildet und weist an seiner Innenseite vom Boden 11 abstehende Zapfen 12 auf. An den Seitenwänden 13 des Geräteträgers 1 befinden sich schwalbenschwanzförmige Ausformungen 14. In entsprechender Weise ist das Geräteträger-Erweiterungsteil 4 ausgeführt, das mittels eines schwalbenschwanzförmigen Zwischenstücks 15 über die entsprechend ausgebildeten Ausformungen 14 an den Geräteträger 1 ankoppelbar ist.

Die Leiterplatte 2 trägt eine elektrische Schaltung, z.B. mit Leistungsverstärkern 16 und einer Eingangsbeschaltung für eine Schaltzustandsabfrage der Schaltgeräte. Weiterhin ist auf der Leiterplatte 2, die über die Zapfen 12 des Geräteträgers 1 gelagert ist, eine mit der Schaltung verbundene Steckleiste 17 angeordnet.

Die Leiterplatte 2 ist auf der dem Boden 11 des Geräteträgers 1 gegenüberliegenden Seite durch die Abdeckplatte 3 geschützt, auf der eine Hutschiene 18 integriert ist. Auf die Hutschiene 18 sind beispielsweise zwei Schaltgeräte, z.B. Schütze, Überlastrelais und Leistungsschalter aufschnappbar.

Wird ein weiteres Schaltgerät benötigt, wird der Geräteträger 1 um das Geräteträger-Erweiterungsteil 4 mit dem Leiterplatten-Erweiterungsteil 5 und der zugehörigen Abdeckzusatzplatte 6 mit Hutschienenteil 19 erweitert.

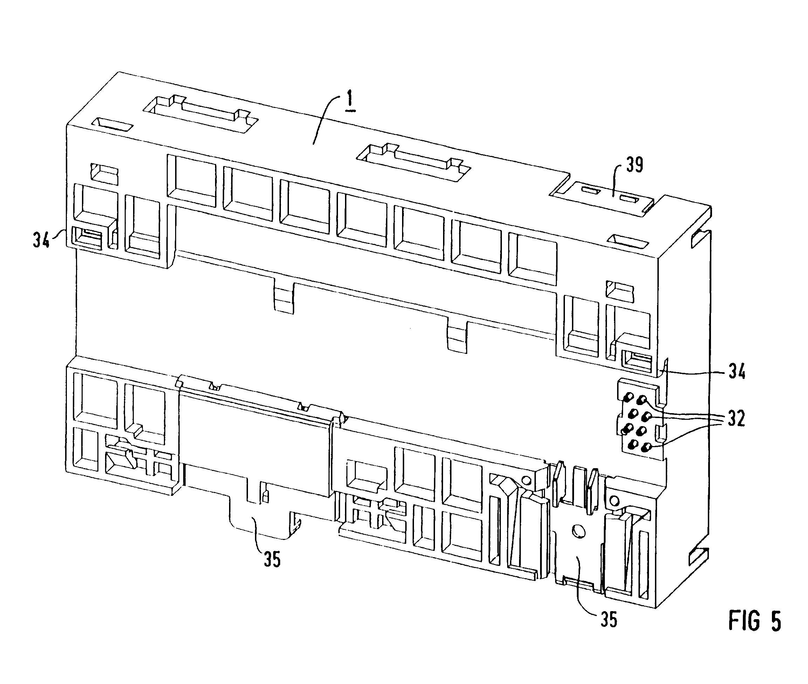

Das Kommunikationsmodul 7 ist über lösbare Verrastmittel 33 auf dem Geräteträger 1 aufsteckbar, wobei zugleich die Kontaktierung einer rückseitigen Stiftleiste 20 mit der Steckleiste 17 auf der Leiterplatte 2 erfolgt. Als Gegenelement weist der Geräteträger 1 zur Verrastung eine Steckschnapplasche 39 (FIG 5) auf.

Im Kommunikationsmodul 7 befindet sich eine Elektronik, die über einen Datenbus z.B. mit einer übergeordneten speicherprogrammierbaren Steuerung (SPS) oder einer gleich aufgebauten kommunikationsfähigen Schaltgeräteeinheit im Schaltschrank kommuniziert. Dies kann eine busneutrale Kommunikation mit einem Aktuator-Sensor-Interface sein. Der Datenbus und die elektrische Versorgung der Elektronik erfolgt bei der Ausführungsform gemäß FIG 1 über eine Leitung mit Busstecker, der frontseitig am Steckplatz 21 des Kommunikationsmoduls 7 aufsteckbar ist. In einem Fenster 22 an der Frontseite des Kommunikationsmoduls 7 sind z.B. Statusanzeigen über den Schaltzustand der Schaltgeräte und Bedienelemente vorgesehen.

Alternativ zum Anschluß eines Bussteckers ist auch eine Lösung denkbar, bei der die elektrische Anbindung an die Elektronik im Kommunikationsmodul 7 z.B. über formkodierte Busleitungen erfolgt. Diese werden in das Kommunikationsmodul 7 eingedrückt, wobei Kontaktschneiden, -messer oder -spitzen den isolierenden Außenmantel durchdringen bis die Kontaktierung mit den Leitungsadern hergestellt ist.

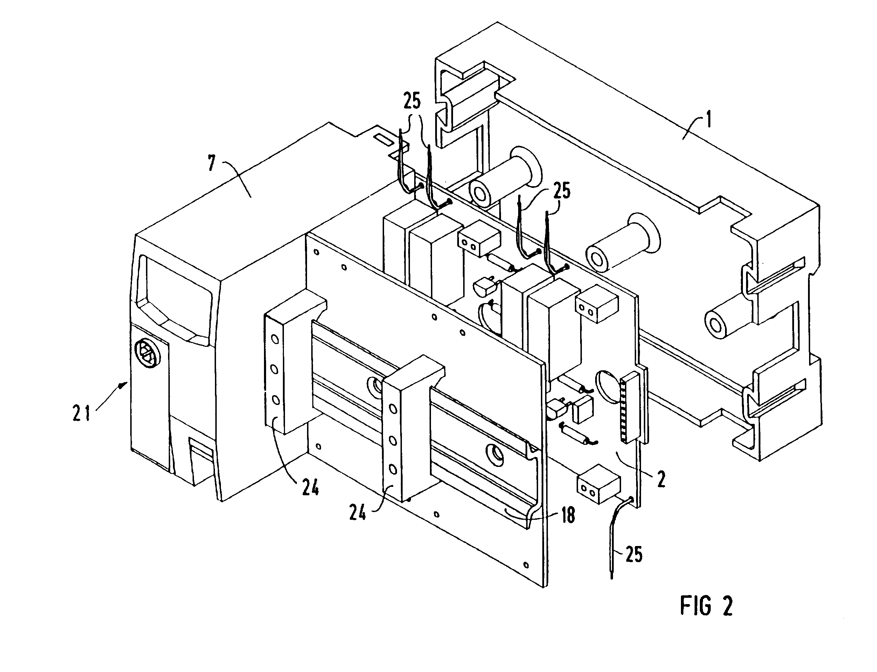

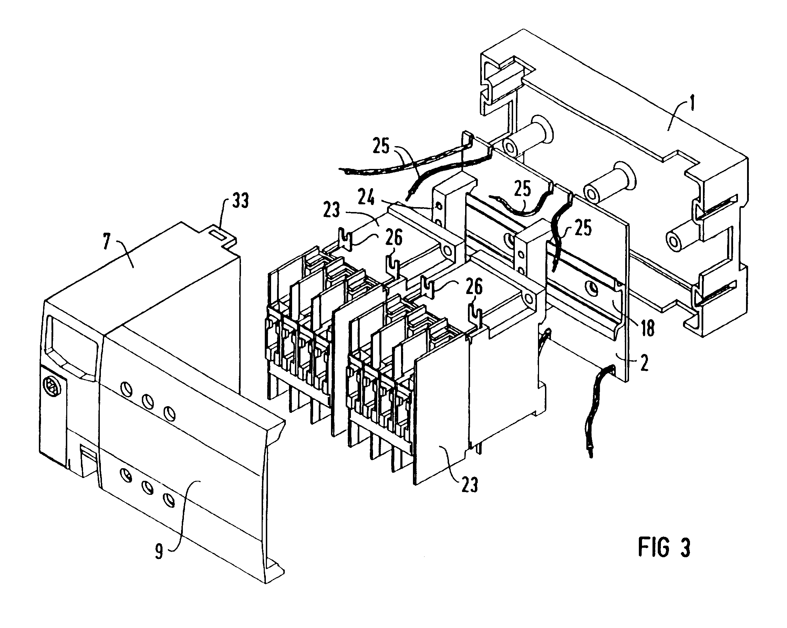

FIG 2 zeigt die Schaltgeräteeinheit gemäß FIG 1, wobei das Kommunikationsmodul 7 über seine Stiftleiste 20 und die Steckleiste 17 mit der elektrischen Schaltung auf der Leiterplatte 2 elektrisch verbunden ist. Auf die in der Abdeckplatte 3 integrierte Hutschiene 18 sind zwei Schaltgeräte 23 aufschnappbar, wie es in FIG 3 dargestellt ist.

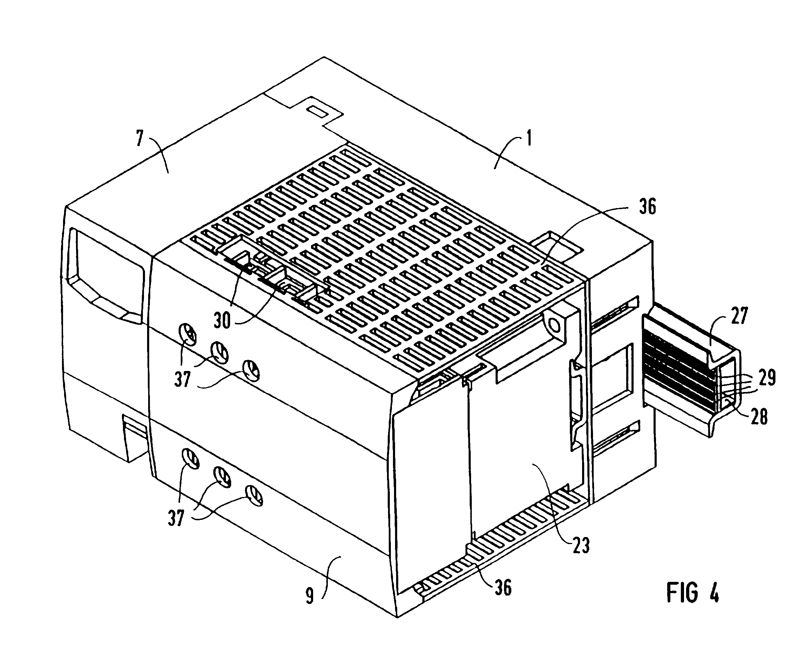

Die auf der Leiterplatte 2 angeordneten Leistungsverstärker 16 (siehe FIG 2) zur Erregung der Spulen in den Schaltgeräten 23 sind nach Montage der Schaltgeräte 23 auf der Hutschiene 18 durch Anschluß von Leitungen 25 an den Spulenanschlüssen 26 (FIG 3) elektrisch ankoppelbar. Die gesamte Schaltgeräteeinheit ist über die Rückwand des Geräteträgers 1 auf eine Normprofilschiene 27 gemäß FIG 4 aufschnappbar.

Die Hutschiene 18 ist in einem der Breite der Schaltgeräte 23 angepaßten Rasterabstand mit Kontaktblöcken 24 versehen. Sie stehen mit der elektrischen Schaltung in Verbindung und dienen alternativ zur elektrischen Ansteuerung der Schaltgeräte 23, die zur Kontaktierung mit den Kontaktblöcken 24 seitlich aus ihrem Gehäuse herausgeführte, hier nicht dargestellte Kontaktstifte aufweisen. Letztere werden beim Aufschnappen der Schaltgeräte 23 auf die Hutschiene 18 von Gegenkontakten der Kontaktblöcke 24 aufgenommen.

Die Abdeckung der Schaltgeräte geschieht mittels der Frontabdeckung 9 oder 10 sowie an der Ober- und Unterseite mit jeweils einer Gitterabdeckung 36. Die Frontabdeckung 9,10 ist den hier nicht sichtbaren Kontaktanschlußschrauben der Schaltgeräte 23 gegenüberliegend mit Schraubendreheröffnungen 37, und die Gitterabdeckungen 36 sind den Leitungseinführöffnungen der Schaltgeräte 23 gegenüberliegend mit Schlitzen 30 zur Aufnahme der zu- und abgehenden Hauptstromleitungen versehen.

In die Normprofilschiene 27 ist eine Steuerschiene 28 eingelegt. Die Steuerschiene 28 weist hier zwei Datenleitungen 29 und zwei Versorgungsleitungen 29, z.B. zum Anschluß an eine Gleichspannung von 24 V, auf. Bei dieser Ausführungsform erübrigt sich demgemäß die Anschlußmöglichkeit für einen Busstecker am Kommunikationsmodul 7 gemäß FIG 1, d.h. ein entsprechender Steckplatz 21 ist nicht vorhanden.

Nähere Einzelheiten zur Kontaktierung der Schaltgeräteeinheit mit der Steuerschiene 28 sind FIG 5 zu entnehmen, die die Rückseite des Geräteträgers 1 der Schaltgeräteeinheit zeigt. Zur Kontaktierung sind federnde Kontaktnoppen oder Kontaktstifte 32 vorhanden, wobei eine ausreichende Kontaktzuverlässigkeit für den Kontakt mit jeder Strombahn durch jeweils zwei seitlich versetzte Kontaktnoppen 32 gewährleistet wird. FIG 5 zeigt außerdem eine Steckschnapplasche 39 zur mechanischen Ankopplung des Kommunikationsmoduls 7 sowie Verrastungselemente in Form von Rastvorsprüngen 34 und Schiebern 35 zur Verrastung mit einer Normprofilschiene 27.

Die Schaltgeräteeinheit nach FIG 4 gleicht in ihrem Aufbau der Ausführungsform nach FIG 1.

Bei der mit einem Steckplatz 21 am Kommunikationsmodul 7 ausgeführten Schaltgeräteeinheit gemäß FIG 2 können an der Rückwand des Geräteträgers 1 Hauptstromanschlüsse 38, z.B. zum Anschluß an ein dreiphasiges Sammelschienensystem vorgesehen sein, an die elektrische Verbraucher über die Schaltgeräte 23 zuschaltbar sind.

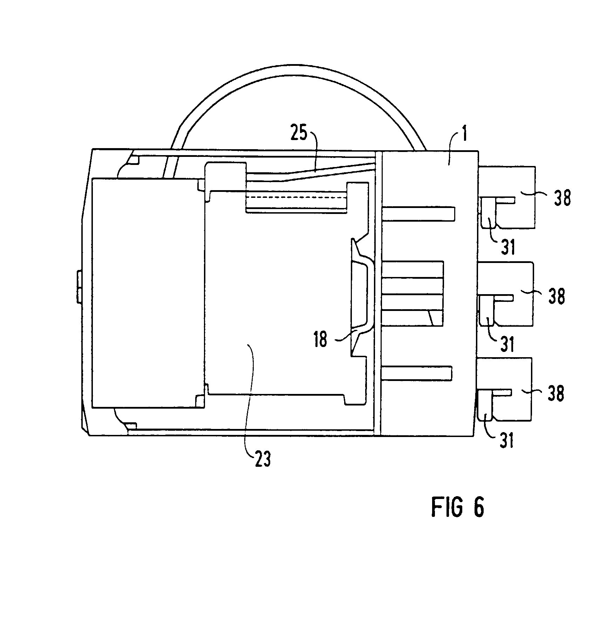

Eine solche Schaltgeräteeinheit wird durch Einhängen an den Sammelschienen 31 zugleich gehaltert und kontaktiert, wie es FIG 6 näher darstellt. Die entsprechende interne Verdrahtung von den Hauptstromanschlüssen 38 zu den Schaltgeräten 23 kann bereits vom Hersteller ausgeführt werden, d.h. kundenseitig ist die betriebsbereite Schaltgeräteeinheit nur noch an den Sammelschienen 31 einzuhängen.

## Patentansprüche

1. Datenkommunikationsfähige Schaltgeräteeinheit mit einem Geräteträger (1), auf dem mehrere elektromagnetisch betriebene Schaltgeräte (23), z.B. Schütze, Überlastrelais und Leistungsschalter, über eine Hutschiene (18) adaptierbar sind, sowie mit einem über einen Datenbus Kommunikationsfähigen Kommunikationsmodul (7), das am Geräteträger (1) gehalten ist und Steckkontakte (20) aufweist, über die die elektrische Ansteuerung der Schaltgeräte (23) vorgesehen ist.

2. Schaltgeräteeinheit nach Anspruch 1, **dadurch gekennzeichnet**, daß der Geräteträger (1) mit elektrischen ersten Kontakten (32) und Schnappverbindungsmitteln (34,35) derart versehen ist, daß bei Aufschnappen auf eine Normprofilschiene (27) in dieser integrierte Daten- und Versorgungsleitungen (29) mit den ersten Kontakten (32) automatisch kontaktiert werden.

3. Schaltgeräteeinheit nach Anspruch 1, **dadurch gekennzeichnet**, daß der Geräteträger (1) rückseitig mit Stromanschlüssen (38) zur elektrischen Verbindung mit Sammelschienen (31) als Hauptstrombahnen versehen ist, an die elektrische Verbraucher über die Schaltgeräte (23) zuschaltbar sind.

4. Schaltgeräteeinheit nach einem der vorangehenden Ansprüche, **dadurch gekennzeichnet**, daß am Kommunikationsmodul (7) ein Steckplatz (21) zum Anschluß eines Bussteckers vorgesehen ist.

5. Schaltgeräteeinheit nach einem der vorangehenden Ansprüche, **dadurch gekennzeichnet**, daß im Geräteträger (1) eine Leiterplatte (2) mit Vorschaltkomponenten (16), z.B. Leistungsverstärker für die Schaltgeräte (23) integriert ist.

6. Schaltgeräteeinheit nach einem der vorangehenden Ansprüche, **dadurch gekennzeichnet**, daß der Geräteträger (1) wannenförmig ausgebildet ist, die Leiterplatte (2) darin aufgenommen ist und der Geräteträger (1) mit einer die Leiterplatte (2) abdeckenden Abdeckplatte (3,8) versehen ist.

7. Schaltgeräteeinheit nach Anspruch 6, **dadurch gekennzeichnet**, daß auf der Außenseite der Abdeckplatte (3) die Hutschiene (18) aufgebracht oder integriert ist.

8. Schaltgeräteeinheit nach einem der vorangehenden Ansprüche, **dadurch gekennzeichnet**, daß die Schaltgeräteeinheit modular erweiterbar ist.

9. Schaltgeräteeinheit nach Anspruch 8, **dadurch gekennzeichnet**, daß zur modularen Erweiterung der Geräteträger (1) mit einem Geräteträger-Erweiterungsteil (4) versehbar ist, auf den über ein zugehöriges Hutschienenteil (19) zumindest ein weiteres Schaltgerät (23) adaptierbar ist, das vom Kommunikationsmodul (7) ansteuerbar ist.

10. Schaltgeräteeinheit nach einem der vorangehenden Ansprüche, **dadurch gekennzeichnet**, daß das Kommunikationsmodul (7) über lösbare Steck-Schnappverbindungsmittel (33) am Geräteträger (1) befestigbar ist.

11. Schaltgeräteeinheit nach einem der vorangehenden Ansprüche, **dadurch gekennzeichnet**, daß die Schaltgeräte (23) mit zweiten Kontakten ausgebildet sind, die bei Aufschnappen der Schaltgeräte (23) auf die Hutschiene (18) Gegenkontakte in Kontaktblöcken (24) auf der Hutschiene (18) kontaktieren und auf diese Weise die elektrische Ansteuerung der Schaltgeräte (23) ausgehend von dem Datenkommunikationsmodul (7) ohne zusätzliche Verdrahtung herstellbar ist.

## Claims

1. A switching device unit with a data communication capability comprising a device carrier (1) on which a plurality of electromagnetically operated switching devices (23), for example contactors, overload relays and circuit breakers, can be adapted via a top-hat rail (18), and comprising a communications module (7) which is capable of communicating via a data bus and which is held on the device carrier (1) and has plug contacts (20) via which the electric actuation of the switching devices (23) is provided.

2. A switching device unit according to Claim 1, characterised in that the device carrier (1) is provided with first electric contacts (32) and snap-action connecting means (34, 35) such that when snapped onto a standard mounting rail (27), the first contacts (32) are automatically contacted with data- and supply lines (29) integrated into said rail (27).

3. A switching device unit according to Claim 1, characterised in that on its rear side the device carrier (1) is provided with electric terminals (38) for electrical connection to busbars (31) as main circuits to which electric consumers can be connected via the switching devices (23).

4. A switching device unit according to one of the preceding claims, characterised in that a plug-in slot (21) for the connection of a bus connector is provided on the communications module (7).

5. A switching device unit according to one of the preceding claims, characterised in that a circuit board (2) with upstream components (16), for example power amplifiers for the switching devices (23), is integrated in the device carrier (1).

6. A switching device unit according to one of the preceding claims, characterised in that the device carrier (1) is trough-shaped, the circuit board (2) is accommodated therein, and the device carrier (1) is provided with a cover plate (3, 8) covering the circuit board (2).

7. A switching device unit according to Claim 6, characterised in that the top-hat rail (18) is applied to or integrated in the exterior of the cover plate (3).

8. A switching device unit according to one of the preceding claims, characterised in that the switching device unit is extendable in modular fashion.

9. A switching device unit according to Claim 8, characterised in that for the modular extension, the device carrier (1) can be provided with a device carrier expansion member (4) to which at least one further switching device (23), actuatable by the communications module (7), can be adapted via an associated top-hat rail member (19).

10. A switching device unit according to one of the preceding claims, characterised in that the communications module (7) can be attached to the device carrier (1) via detachable plug-in, snap-action connecting means (33).

11. A switching device unit according to one of the preceding claims, characterised in that the switching devices (23) are designed with second contacts which, when the switching devices (23) are snapped onto the top-hat rail (18), make contact with mating contacts in contact blocks (24) on the top-hat rail (18) and in this way the electric actuation of the switching devices (23) can be implemented from the data communications module (7) without additional wiring.

## Revendications

1. Unité d'appareillages de commutation apte aux communications de données, comprenant un support (1) d'appareillages sur lequel peuvent être adaptés, par l'intermédiaire d'un rail chapeau (18), plusieurs appareillages de commutation (23) à fonctionnement électromagnétique, par exemple des contacteurs-disjoncteurs, des relais de surcharge et des commutateurs de puissance, l'unité comportant également un module de communication (7), qui est apte aux communications par l'intermédiaire d'un bus de données, et qui est maintenu sur le support (1) d'appareillages et présente des fiches de contact de connexion (20) par l'intermédiaire desquelles est prévue la commande électrique des appareillages de commutation (23).

2. Unité d'appareillages de commutation selon la revendication 1, **caractérisée** en ce que le support (1) d'appareillages est doté de premiers contacts électriques (32) et de moyens de liaison par encliquetage (34, 35) de façon telle, que lors de l'encliquetage sur un rail profilé (27) normalisé, des lignes de données et d'alimentation (29) intégrées dans celui-ci, entrent automatiquement en contact avec les premiers contacts (32).

3. Unité d'appareillages de commutation selon la revendication 1, **caractérisée** en ce que le support (1) d'appareillages est doté sur son côté arrière, de bornes de raccordement de courant (38) pour la liaison électrique à des barres omnibus (31) en guise de lignes de courant principales auxquelles peuvent être commutés des récepteurs électriques par l'intermédiaire des appareillages de commutation.

4. Unité d'appareillages de commutation selon l'une des revendications précédentes, **caractérisée** en ce que sur le module de communication (7) est prévu un emplacement de connexion (21) pour le raccordement d'un connecteur de bus.

5. Unité d'appareillages de commutation selon l'une des revendications précédentes, **caractérisée** en ce que dans le support (1) d'appareillages est intégrée une plaque de circuit imprimé (2) comportant des composants (16) de commutation primaires, par exemple des amplificateurs de puissance pour les appareillages de commutation (23).

6. Unité d'appareillages de commutation selon l'une des revendications précédentes, **caractérisée** en ce que le support (1) d'appareillages présente une forme de bac, la plaque de circuit imprimé (2) y étant logée et le support (1) d'appareillages étant pourvu d'une plaque de recouvrement (3, 8) qui recouvre la plaque de circuit imprimé (2).

7. Unité d'appareillages de commutation selon la revendication 6, **caractérisée** en ce que du côté extérieur de la plaque de recouvrement (3) est rapporté ou intégré le rail chapeau (18).

8. Unité d'appareillages de commutation selon l'une des revendications précédentes, **caractérisée** en ce que l'unité d'appareillages de commutation peut être étendue de manière modulaire.

9. Unité d'appareillages de commutation selon la revendication 6, **caractérisée** en ce que pour l'extension modulaire, le support (1) d'appareillages peut être muni d'une pièce d'extension de support (4) d'appareillages, sur lequel peut être adapté, par l'intermédiaire d'une pièce de rail chapeau (19) associée, au moins un autre appareillage de commutation (23) susceptible d'être commandé par le module de communication (7).

10. Unité d'appareillages de commutation selon l'une des revendications précédentes, **caractérisée** en ce que le module de communication (7), peut être fixé au support (1), d'appareillages, par l'intermédiaire de moyens de liaison (33) enfichables et encliquetables et démontables.

11. Unité d'appareillages de commutation selon l'une des revendications précédentes, **caractérisée** en ce que les appareillages de commutation (23) comportent deux contacts, qui lors de l'enclenchement des appareillages de commutation (23) sur le rail chapeau (18) viennent en contact avec des contacts conjugués dans des blocs de contact (24) sur le rail chapeau (18), en permettant ainsi l'établissement de la commande électrique des appareillages de commutation (23) à partir du module de communication (7), sans câblage supplémentaire.
